# EUROPÄISCHE PATENTSCHRIFT

(11) **EP 0 983 932 B1**
(45) Veröffentlichungstag und Bekanntmachung des Hinweises auf die Patenterteilung: **04.02.2004**
(21) Anmeldenummer: 99117203.2
(22) Anmeldetag: 01.09.1999
(51) Int. Cl.: B62D 53/12, B60D 1/62

(54) **Schleppzug**
Trailer train
Convoi routier

(30) Priorität: 02.09.1998 DE 19840007
(43) Veröffentlichungstag der Anmeldung: 08.03.2000
(73) Patentinhaber: ROCKINGER Spezialfabrik für Anhängerkupplungen GmbH & Co., D-80935 München (DE)
(72) Erfinder: Malisch, Roman, 85579 Neubiberg (DE); Knopf, Alois, 85521 Ottobrunn (DE); Szczepanek, Udo, 82223 Eichenau (DE); Ogris, Gottfried, 85716 Unterschleissheim (DE)
(74) Vertreter: Herzog, Markus, Dipl.-Phys. Dr.

(56) Entgegenhaltungen:
- EP-A- 0 539 675
- DE-A- 2 900 866
- DE-C- 702 927

## Beschreibung

Die Erfindung betrifft einen Schleppzug gemäß des Oberbegriffes Anspruchs 1.

Unter einer Versorgungskupplung wird dabei eine Kupplung zwischen zwei Leitungsabschnitten einer Leitung verstanden, die dazu bestimmt und geeignet ist, dem Nachlauffahrzeug von einer auf dem Zugfahrzeug angeordneten Versorgungseinrichtung her elektrischen Strom oder/und Steuerbefehle oder/und Druckluft oder/und Hydraulikfluid für die verschiedensten Funktionen, beispielsweise Beleuchtungsfunktion, Bremsfunktionen, Kipperbetätigung und dergleichen, zuzuführen. Dabei ist es grundsätzlich denkbar, für die verschiedenen Zuführungen eine Mehrzahl von Versorgungsleitungen und eine entsprechende Anzahl von Versorgungskupplungen vorzusehen. Bevorzugt wird man aber, um einer vereinfachten Handhabung willen, möglichst viele Versorgungsleitungen in einem einzigen Kabel- oder Schlauchstrang zusammenfassen, um durch Kupplung einer einzigen oder einiger weniger Versorgungskupplungen alle notwendigen Versorgungsleitungen funktionstüchtig zu machen.

Bei herkömmlichen Schleppzügen erfolgt das Kuppeln der Versorgungskupplung von Hand. Hierzu ist es erforderlich, daß die Bedienungsperson sich vom Fahrerplatz aus in den Bereich der Stirnwand des Nachlauffahrzeugs begibt und dort die beiden Kupplungshälften miteinander verbindet.

Aus der gattungsbildenden EP 0 539 675 A1 ist ein Schleppzug bekannt, bei welchem die Versorgungskupplung derart ausgebildet und angeordnet ist, daß die beiden Kupplungshälften bei einer Annäherung des Zugfahrzeugs an das Nachlauffahrzeug zum Zwecke der Herstellung der Zug- und Schubverbindung zwischen diesen beiden Teilfahrzeugen zwangsläufig miteinander in Eingriff treten. Hierzu ist die zugseitige Kupplungshälfte an dem Zugfahrzeug in einer Halterung in Fangbereitschaftsstellung gehalten. An dem Nachlauffahrzeug ist eine Zahnstange angebracht, welche bei Annäherung des Zugfahrzeugs an das Nachlauffahrzeug mit der zugseitigen Kupplungshälfte in Eingriff tritt, d.h. diese fängt und aus der Halterung abstreift. Anschließend wird die zugseitige Kupplungshälfte dann mittels eines Motors längs der Zahnstange zur nachlaufseitigen Kupplungshälfte hin transportiert und mit dieser gekuppelt.

Bei dem aus der EP 0 539 675 A1 bekannten Schleppzug muß das Zugfahrzeug mit einer innerhalb recht enger Grenzen vorbestimmten Relativorientierung bezüglich des Nachlauffahrzeugs an dieses angenähert werden, um ein ordnungsgemäßes Fangen der zugseitigen Kupplungshälfte durch die Zahnstange sicherzustellen. Insbesondere dürfen das Zugfahrzeug und das Nachlauffahrzeug keine bzw. nur eine sehr geringe Relativverkippung um die Querachse aufweisen, wie sie beispielsweise dann vorliegen kann, wenn das Nachlauffahrzeug auf ebener Strecke steht, die Zugmaschine sich jedoch auf einer ansteigenden oder abschüssigen Rampe befindet. In diesem Fall kann es bei dem bekannten Schleppzug geschehen, daß die zugseitige Kupplunghälfte von der Zahnschiene nicht ordnunggemäß gefangen wird und herunterfällt.

Demgegenüber ist es Aufgabe der Erfindung, einen Schleppzug der eingangs genannten Art anzugeben, bei welchem bei gleichzeitiger größerer Freizügigkeit hinsichtlich der zulässigen Relativorientierungen von Zugfahrzeug und Nachlauffahrzeug ein zuverlässiges Zusammenführen von zugseitiger Kupplungshälfte und nachlaufseitiger Kupplungshälfte sichergestellt ist.

Diese Aufgabe wird erfindungsgemäß durch einen Schleppzug gemäß des Anspruchs 1.

Erfindungsgemäß trägt die an dem einen Teilfahrzeug angeordnete Stellvorrichtung die eine Kupplungshälfte zumindest solange, bis der Kupplungszustand zwischen den beiden Kupplungshälften hergestellt ist. Somit ist es nicht erforderlich, die eine Kupplungshälfte vor deren Eingriff mit der anderen Kupplungshälfte von einer an dem einen Teilfahrzeug angeordneten Vorrichtung an eine an dem anderen Teilfahrzeug angeordnete Vorrichtung zu übergeben bzw. von dieser fangen zu lassen. Da bei dem erfindungsgemäßen Schleppzug eine derartige Übergabe der einen Kupplungshälfte vermieden ist, besteht nicht die Gefahr eines Herunterfallens der einen Kupplungshälfte. Darüber hinaus gibt die Stellvorrichtung, wie vorstehend bereits erwähnt, die eine Kupplungshälfte erst frei, wenn der Kupplungszustand zwischen den beiden Kupplungshälften hergestellt ist, so daß eine zuverlässige Verbindung der beiden Kupplungshälften sichergestellt ist.

Ferner stellt das Verbinden der beiden Kupplungshälften aufgrund der Verwendung der Stellvorrichtung keine hohen Anforderungen an die Relativorientierung der beiden Teilfahrzeuge. Daher können das Zugfahrzeug und das Nachlauffahrzeug bei Herstellung des Kupplungszustands der beiden Kupplungshälften eine innerhalb großzügiger Grenzen frei wählbare Relativorientierung aufweisen. Da die Stellvorrichtung die eine Kupplungshälfte zu der durch Lage der anderen Kupplungshälfte vorgegebenen Kupplungsachse bewegen und dort positionieren muß, die eine Kupplungshälfte in Richtung dieser Kupplungsachse orientieren muß und schließlich die eine Kupplungshälfte längs der Kupplungsachse an die andere Kupplungshälfte heranführen muß, sind die bei dem erfindungsgemäßen Schleppzug praktisch vorhandenen Grenzen für die zulässigen Relativorientierung der beiden Teilfahrzeuge lediglich als Kompromiß zwischen einerseits den in der Praxis überhaupt auftretenden Relativorientierungen zwischen den beiden Teilfahrzeugen und andererseits einem unter wirtschaftlichen Gesichtspunkten vertretbaren Aufwand bei der Konstruktion der Stellvorrichtung anzusehen.

Da zu Beginn eines Kupplungsvorgangs die präzise Relativorientierung der beiden Teilfahrzeuge nicht bekannt ist, und überdies nicht präzise bekannt ist, wo und in welcher Orientierung die andere Kupplungshälfte am anderen Teilfahrzeug angebracht ist, wird zur Erleichterung der Positionierung der einen Kupplungshälfte auf der Kupplungsachse und zur Erleichterung der Orientierung der einen Kupplungshälfte in Richtung auf die andere Kupplungshälfte zu vorgeschlagen, am anderen Teilfahrzeug Positionierungs- und Orientierungs-Hilfsmittel anzubringen. Diese Positionierungs- und Orientierungs-Hilfsmittel können beispielsweise von Markierungen am anderen Teilfahrzeug gebildet sein, welche von an dem einen Teilfahrzeug, vorzugsweise an der Stellvorrichtung, angeordneten Sensoreinheiten erfaßt werden.

Erfindungsgemäß wird jedoch vorgeschlagen, daß die Positionierungs- und Orientierungs-Hilfsmittel zwei zu der vorbestimmten Kupplungsachse und vorzugsweise auch zueinander orthogonal verlaufende Anschlagflächen umfaßt und daß an der einen Kupplungshälfte oder einem mit dieser verbindbaren Teil mit den Anschlagflächen zusammenwirkende Gegenanschläge vorgesehen sind. Diese Ausführung der Positionierungs- und Orientierungs-Hilfsmittel ermöglicht eine erhebliche Vereinfachung des Aufbaus der Stellvorrichtung:

Grundsätzlich ist es möglich, alle fünf zur Positionierung der einen Kupplungshälfte auf der durch die andere Kupplungshälfte vorgegebenen Kupplungsachse, zur Orientierung der einen Kupplungshälfte in Richtung dieser Kupplungsachse und zur Annäherung der einen Kupplungshälfte an die andere Kupplungshälfte längs dieser Kupplungsachse mindestens erforderlichen Bewegungsachsen der Stellvorrichtung mit Stellantrieben auszustatten, beispielsweise elektromotorischen, hydraulischen, pneumatischen, hydro-pneumatischen oder anderen geeignet aufgebauten Stellantrieben. Wobei die Stellvorrichtung selbstverständlich auch mehr als fünf Bewegungsachsen aufweisen kann.

Bei Vorsehen der Positionierungs- und Orientierungs-Hilfsmittel und Ausbildung dieser Hilfsmittel mit zwei zu der vorbestimmten Kupplungsachse und vorzugsweise auch zueinander orthogonal verlaufenden Anschlagsflächen genügen jedoch beispielsweise drei derartige Stellantriebe, welche die translatorische Bewegung der einen Kupplungshälfte im dreidimensionalen Raum ermöglichen, also die Positionierung der einen Kupplungshälfte auf der Kupplungsachse und die Annäherung der einen Kupplungshälfte an die andere Kupplungshälfte längs der Kupplungsachse. Die korrekte Orientierung der einen Kupplungshälfte in Richtung der Kupplungsachse, d.h. die Bedienung der restlichen, beispielsweise zwei, Bewegungsachsen, wird unter dem Einfluß translatorischer Verstellung der einen Kupplungshälfte indirekt durch das Zusammenwirken der Anschlagflächen mit den der einen Kupplungshälfte zugeordneten Gegenanschlägen bewirkt, d.h. ohne daß hierzu gesonderte motorische Stellantriebe erforderlich sind.

Darüber hinaus erleichtert das Zusammenwirken der Anschlagflächen mit den der einen Kupplungshälfte zugeordneten Gegenanschlägen das Auffinden der Kupplungsachse bzw. das Halten der Kupplungsachse bei der Annäherungsbewegung an die andere Kupplungshälfte.

Die Anschlagflächen können beispielsweise von den zueinander vorzugsweise orthogonal verlaufenden Flächen eines Profilblechs, beispielsweise eines Winkelblechs, gebildet sein.

Um nach Positionierung der einen Kupplungshälfte auf der Kupplungsachse ein Wiederentfernen dieser Kupplungshälfte von der Kupplungsachse wenigstens in einer Raumrichtung zumindest erschweren zu können, wird in Weiterbildung der Erfindung vorgeschlagen, daß entsprechende Sicherungsmittel, beispielsweise in Form einer Sicherungsfläche, vorgesehen sind. Diese Sicherungsfläche kann beispielsweise von einem Blechstreifen gebildet sein, der von einem der Profilabschnitte des Profilblechs ausgeht und sich vorzugsweise im wesentlichen parallel zu dem jeweils anderen Profilabschnitt des Profilblechs erstreckt. Die Sicherungsmittel bilden somit zusammen mit den Anschlagflächen eine Führungsschiene für die eine Kupplungshälfte oder ein mit dieser verbundenes Teil.

Um kurz vor dem In-Eingriff-Treten der beiden Kupplungshälften eine exakte Relativpositionierung dieser beiden Kupplungshälften sicherstellen und so einer Beschädigung der Steckkontakte vorbeugen zu können, wird weiter vorgeschlagen, daß in einem Annäherungsbereich unmittelbar vor der weiteren Kupplungshälfte weitere Sicherungsmittel vorgesehen sind, welche, beispielsweise in Zusammenwirken mit den einen Sicherungsmitteln, eine Bewegung der einen Kupplungshälfte lediglich in Richtung der Kupplungsachse zulassen. Diese weiteren Sicherungsmittel können von einem weiteren Blechstreifen gebildet sein, der von dem anderen Profilabschnitt des Profilblechs ausgeht, vorzugsweise einem Winkelblech dessen freier Schenkel sich auf den einen Blechstreifen zu erstreckt. Zusätzlich kann an dem von der anderen Kupplungshälfte entfernten Ende des weiteren Blechstreifens eine Einweisschräge ausgebildet oder angeordnet sein.

Die Stellvorrichtung kann gemäß einer Vielzahl von Ausbildungsformen ausgeführt sein. Beispielsweise könnte an der Rückwand der Fahrerkabine des Zugfahrzeugs ein YZ-Tisch angeordnet sein, der eine Verstellung in Richtung der Querachse Y und der Hochachse Z des Zugfahrzeugs ermöglicht, und zwar eine Verstellung eines in Längsrichtung X des Zugfahrzeugs längenveränderlichen Teleskoparms. Erfindungsgemäß wird jedoch vorgeschlagen, daß die Stellvorrichtung einen an dem einen Teilfahrzeug angelenkten Roboterarm mit wenigstens zwei relativ zueinander verschwenkbaren Armteilen umfaßt, wobei die eine Kupplungshälfte an dem freien Ende des Roboterarms anordenbar ist. Dies hat den Vorteil, daß der Roboterarm dann, wenn er nicht zum Herstellen oder Lösen des Kupplungszustands zwischen den beiden Kupplungshälften benötigt wird, raumsparend und somit eine Relativbewegung der beiden Teilfahrzeuge nicht behindernd in eine Parkstellung an das eine Teilfahrzeug beigeklappt werden kann.

Beispielsweise kann der Roboterarm an dem einen Teilfahrzeug um dessen Hochachse schwenkbar angebracht sein, wobei vorzugsweise dieser Verstellmöglichkeit ein Stellantrieb zugeordnet ist. Darüber hinaus können wenigstens zwei Armteile des Roboterarms relativ zueinander um eine zur Hochachse des einen Teilfahrzeugs im wesentlichen orthogonal verlaufende Achse verschwenkbar sein, wobei vorzugsweise dieser Verstellmöglichkeit ein Stellantrieb zugeordnet ist. Schließlich kann der Roboterarm wenigstens ein längenveränderliches Armteil umfassen, wobei die Längungsrichtung vorzugsweise sowohl zur Hochachse des einen Teilfahrzeugs als auch zur Relativschwenkachse der beiden Armteile im wesentlichen orthogonal verläuft, und wobei dieser Verstellmöglichkeit vorzugsweise ein Stellantrieb zugeordnet ist. Es sei betont, daß die vorstehend angegebenen drei Verstellmöglichkeiten lediglich eine Ausführungsvariante darstellen, um eine translatorische Bewegung des freien Roboterarms unter gleichzeitiger Bereitstellung einer Parkstellung der Roboterarms zu ermöglichen.

Insbesondere dann, wenn die am freien Ende des Roboterarms frei orientierbare eine Kupplungshälfte oder ein dieser zugeordnetes Teil mit Anschlagflächen von Positionierungs- und Orientierungs-Hilfsmitteln zusammenwirkt, ist es von Vorteil, wenn der Roboterarm wenigstens eine Vorspannvorrichtung umfaßt, welche das freie Ende des Roboterarms in den beiden orthogonal zur Kupplungsachse verlaufenden Richtungen, insbesondere auf die beiden Anschlagflächen zu, vorspannt. Diese wenigstens eine Vorspannvorrichtung erleichtert die Steuerung der Bewegung des freien Endes des Roboterarms, beispielsweise zur Annäherung der einen Kupplungshälfte an die andere Kupplungshälfte längs der Kupplungsachse, da die Gegenanschläge der einen Kupplungshälfte auch bei nicht so präziser Steuerung der Stellantriebe aufgrund der Vorspannung stets mit den zugehörigen Anschlagflächen in Kontakt gehalten werden, so daß die eine Kupplungshälfte nicht nur präzise auf der Kupplungsachse positioniert bleibt, sondern auch präzise in Richtung der Kupplungsachse orientiert bleibt. Darüber hinaus schützt die von der wenigstens einen Vorspannvorrichtung bereitgestellte Pufferwirkung bei unpräziser Steuerung den Roboterarm vor einer deformierenden Beschädigung aufgrund zu starker Wechselwirkung mit den Anschlagflächen.

Eine Vorspannvorrichtung kann beispielsweise dadurch gebildet sein, daß zwischen wenigstens zwei Armteilen zusätzlich zu dem Schwenkgelenk mit der orthogonal zur Hochachse verlaufenden Schwenkachse ein weiteres Schwenkgelenk vorgesehen ist, dessen eines Gelenkteil gegen einen Anschlag des anderen Gelenkteils vorgespannt ist. Eine weitere Möglichkeit zur Ausbildung einer der Vorspannvorrichtungen besteht darin, daß wenigstens ein Stellantrieb zwischen einem mit der Antriebseinheit des Stellantriebs verbundenen Abtriebselement und einem relativ zu dem Abtriebselement verstellbar geführten Ausgangselement eine Federanordnung umfaßt.

Grundsätzlich ist es möglich, die eine Kupplungshälfte am freien Ende des Roboterarms in ständiger Verbindung anzuordnen, und den Roboterarm nach Herstellung des Kupplungszustands zwischen den beiden Kupplungshälften antriebslos und somit frei beweglich zu schalten, so daß er eine Relativbewegung der beiden Teilfahrzeuge im Schleppbetrieb nicht behindert. In diesem Fall müßte der Roboterarm jedoch so ausgelegt sein, daß er bei keiner auch noch so extremen Relativstellung der beiden Teilfahrzeuge der Gefahr einer Beschädigung unterliegt. Um einer Beschädigung des Roboterarms zuverlässig vorbeugen zu können, wird daher erfindungsgemäß vorgeschlagen, daß an dem freien Ende des Roboterarms eine Greifervorrichtung angeordnet ist, vorzugsweise zumindest innerhalb vorbestimmter Grenzen in allen Raumrichtungen orientierbar angeordnet ist, mittels derer die eine Kupplungshälfte am Roboterarm lösbar anordenbar ist. Dies ermöglicht es, den Roboterarm nach Herstellen des Kupplungszustands zwischen den beiden Kupplungshälften von der einen Kupplungshälfte zu lösen und für den anschließenden Schleppbetrieb des Schleppzugs an das eine Teilfahrzeug beizuklappen. Ein derartiges Beiklappen kann auch dann von Vorteil sein, wenn die eine Kupplungshälfte mittels der Greifervorrichtung an dem Roboterarm gehalten ist, und zwar bei Anordnung des Roboterarms am Zugfahrzeug für den Fall einer Transferfahrt des Zugfahrzeugs von einem Nachlauffahrzeug zu einem anderen Nachlauffahrzeug. Es wird daher weiter vorgeschlagen, daß an dem einen Teilfahrzeug eine Parkvorrichtung für die Stellvorrichtung und gegebenenfalls die eine Kupplungshälfte vorgesehen ist.

Die Greifervorrichtung kann beispielsweise eine Aufnahme für die eine Kupplungshälfte umfassen sowie eine verstellbare Greiferklaue, welche zum Halten der einen Kupplungshälfte mit einer Halteausnehmung der einen Kupplungshälfte in Eingriff bringbar ist.

Um zum Lösen des Kupplungszustands der beiden Kupplungshälften die Greifervorrichtung mittels des Roboterarms in der gleichen Art und Weise an die beiden Kupplungshälften, insbesondere die eine Kupplungshälfte, annähern zu können wie sie vorstehend für den Fall der Herstellung des Kupplungszustands der beiden Kupplungshälften beschrieben worden ist, wird vorgeschlagen, daß an der Greifervorrichtung eine Gegenanschlagsvorrichtung vorgesehen ist, welche zum Zusammenwirken mit einer Anschlagsvorrichtung der Positionierungs- und Orientierungs-Hilfsmittel bestimmt ist. Diese Gegenanschlagsvorrichtung kann beispielsweise einen Rahmen mit wenigstens drei Anschlagspunkten und gewünschtenfalls einer Mehrzahl von an dem Rahmen drehbar gelagerten Rollen umfassen.

Bei einer Annäherung der Gegenanschlagsvorrichtung an die vorzugsweise zueinander orthogonal verlaufende Flächen umfassende Anschlagsvorrichtung tritt die Gegenanschlagsvorrichtung mit ihren wenigstens drei, eine Ebene definierenden Anschlagsstellen zunächst mit einer der beiden Anschlagsflächen der Anschlagvorrichtung in Eingriff. Wird die Gegenanschtagsvorrichtung anschließend längs der Anschlagsfläche zur zweiten Anschlagsfläche bewegt, so reicht ein Eingriff dieser weiteren Anschlagsfläche mit zwei der Anschlagsstellen der Gegenanschlagsvorrichtung aus, um die Greifervorrichtung bezüglich der Kupplungsachse exakt zu positionieren und zu orientieren.

Um die in allen Raumrichtungen im wesentlichen freie Orientierbarkeit der Greifervorrichtung am freien Ende des Roboterarms in konstruktiv einfacher und robuster Weise bereitstellen zu können, wird vorgeschlagen, daß an der Greifervorrichtung ein Bolzen befestigt ist, welcher eine am freien Ende des Roboterarms vorgesehene Öffnung mit Spiel durchsetzt, wobei der Bolzen vorzugsweise von einer Spiral- oder/und Schraubenfeder umgeben ist, die sich einenends an der Greifervorrichtung und andernends am Roboterarm abstützt. Grundsätzlich könnte die freie Bewegbarkeit jedoch auch mittels einer kugelgelenkigen bzw. kardanischen Aufhängung der Greifervorrichtung am freien Ende des Roboterarms bewerkstelligt werden.

Da im rauhen Alltagsbetrieb von Schleppzügen erfahrungsgemäß mit den am Zugfahrzeug angeordneten Teilen sorgsamer umgegangen wird als mit den an Nachlauffahrzeugen angeordneten Teilen, weil Zugfahrzeuge im Gegensatz zu Nachlauffahrzeugen zwischen verschiedenen Speditionsunternehmen praktisch nicht ausgeliehen werden, wird vorgeschlagen, daß die Stellvorrichtung am Zugfahrzeug vorgesehen ist, daß die Positionierungs- und Orientierungs-Hilfsmittel am Nachlauffahrzeug angebracht sind, daß die andere Kupplungshälfte am Nachlauffahrzeug fest angeordnet ist, und daß die eine Kupplungshälfte mit dem Versorgungsteil des Zugfahrzeugs durch eine flexible Versorgungsleitung verbunden ist.

Die Erfindung wird im folgenden an einem Ausführungsbeispiel und einigen Modifikationen anhand der folgenden Zeichnung näher erläutert werden. Es stellt dar:
- Fig. 1: eine Draufsicht auf einen erfindungsgemäßen Schleppzug;
- Fig. 2: eine Detailansicht der Positionierungs- und Orientierungs-Hilfsschiene in Richtung des Pfeils II in Fig. 1;
- Fig. 3: eine Seitenansicht der Positionierungs- und Orientierungs-Hilfsschiene in Richtung des Pfeils III in Fig. 1;
- Fig. 4 bis 6: schematische Darstellungen verschiedener Stellvorrichtungen in Seitenansicht (Fig. 4 und 5) bzw. Draufsicht (Fig. 6);
- Fig. 7 und 8: detailliertere Darstellungen des Roboterarms gemäß Fig. 4 in Seitenansicht (Fig. 7) bzw. Draufsicht (Fig. 8);
- Fig. 9: eine schematische Ansicht einer Greifervorrichtung; und
- Fig. 10: eine schematische Darstellung zur Erläuterung eines Details der einen Kupplungshälfte.

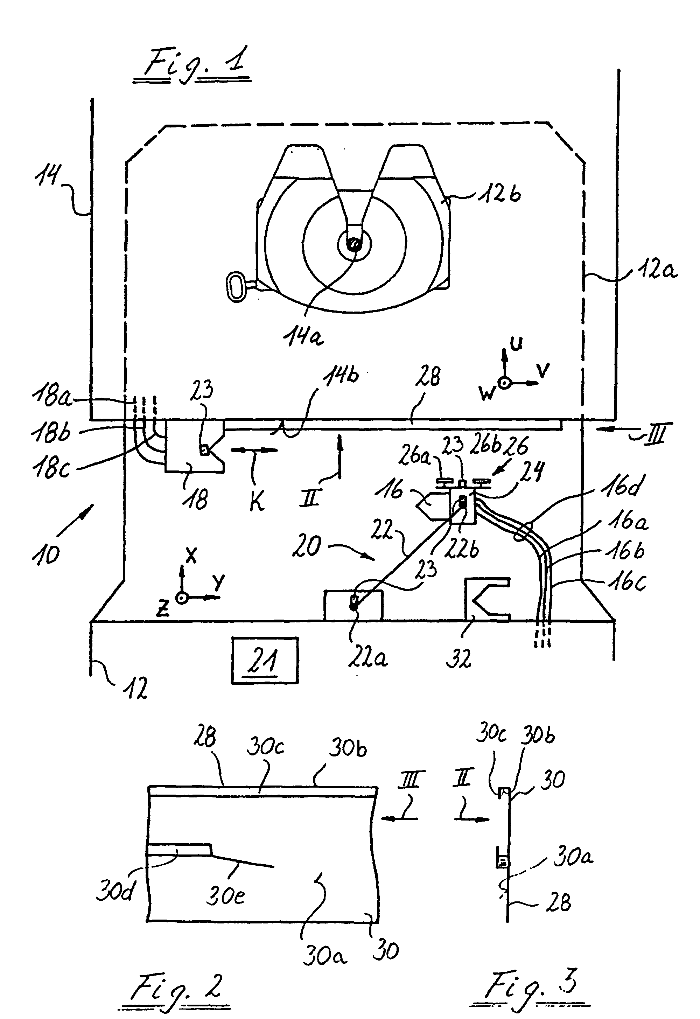

In Fig. 1 ist ein Sattelzug als Beispiel für einen erfindungsgemäßen Schleppzug ganz allgemein mit 10 bezeichnet. Es sei jedoch an dieser Stelle betont, daß die Erfindung mit Vorteil ebenso bei einem mit einer Bolzenkupplung ausgestatteten Gliederzug eingesetzt werden kann, und daß die Erläuterung an Hand des Sattelzugs 10 lediglich als nicht beschränkendes Beispiel zu verstehen ist.

Der Sattelzug 10 umfaßt einen Sattelschlepper 12, d.h. ein Zugfahrzeug des Sattelzugs 10, und einen Sattelauflieger 14, d.h. ein Nachlauffahrzeug des Sattelzugs 10. Auf dem Rahmen 12a des Sattelschleppers 12 ist eine Sattelkupplungsplatte 12b herkömmlicher Bauart angebracht. Die Sattelkupplungsplatte 12b bildet zusammen mit einem Königszapfen 14a des Sattelaufliegers 14 eine Sattelkupplung.

Zur Erleichterung der nachfolgenden Beschreibung ist dem Zugfahrzeug 12 ein Koordinatensystem XYZ zugeordnet mit einer zugfahrzeugseitigen (im folgenden verkürzt "zugseitigen") Längsachse X, einer zugseitigen Querachse Y und einer zugseitigen Hochachse Z. Weiterhin ist auch dem Nachlauffahrzeug 14 ein Koordinatensystem UVW zugeordnet, mit einer nachlauffahrzeugseitigen (im folgenden verkürzt "nachlaufseitigen") Längsachse U, einer nachlaufseitigen Querachse V und einer nachlaufseitigen Hochachse W.

Darüber hinaus sind eine zugseitige Kupplungshälfte 16 und eine nachlaufseitige Kupplungshälfte 18 vorgesehen, welche zusammen eine Versorgungskupplung zwischen den beiden Teilfahrzeugen 12 und 14 bilden und mit zugseitigen Versorgungsleitungen 16a, 16b, 16c,... bzw. nachlaufseitigen Versorgungsleitungen 18a, 18b, 18c,... verbunden sind. Die nachlaufseitige Kupplungshälfte 18 ist an einer vorderen Ladewand 14b des Nachlauffahrzeugs fest angeordnet, während die zugseitige Kupplungshälfte 16 über eine in Fig. 1 ganz allgemein mit 20 bezeichnete Stellvorrichtung relativ zum Zugfahrzeug 12 beweglich angeordnet ist. Die zugseitigen Versorgungsleitungen 16a, 16b, 16c,... sind daher zu einem flexiblen Versorgungsleitungsstrang 16d zusammengefaßt.

Die zugseitigen und nachlaufseitigen Versorgungsleitungen 16a, 16b, 16c,... und 18a, 18b, 18c,... können beispielsweise Spannungs-Versorgungsleitungen, Druckluft-Versorgungsleitungen, Hydraulikfluid-Versorgungsleitungen, Signalleitungen eines für die Bremsenfunktion zuständigen Bus-Systems, Signalleitungen für ein für die sonstigen Funktionen des Nachlauffahrzeugsverantwortliches Bus-System ("Rahmen-Bus") und dergleichen Leitungen mehr sein.

Die Stellvorrichtung 20 umfaßt einen in Fig. 1 lediglich grob schematisch als Strich dargestellten Roboterarm 22, der bei 22a um eine zur Hochachse Z des Zugfahrzeugs 12 parallele Achse schwenkbar angebracht ist. Mittels des Roboterarms 22 kann die zugseitige Kupplungshälfte 16 an die nachlaufseitige Kupplungshälfte 18 angenähert und längs einer durch deren Orientierung vorgegebenen Kupplungsachse K zur Herbeiführung eines Kupplungszustands der Versorgungskupplung zusammengeführt werden. Grundsätzlich kann die Kupplungsachse K am Nachlauffahrzeug beliebig orientiert sein. Bevorzugt verläuft sie jedoch im wesentlich parallel zur Querachse V des Nachlauffahrzeugs 14.

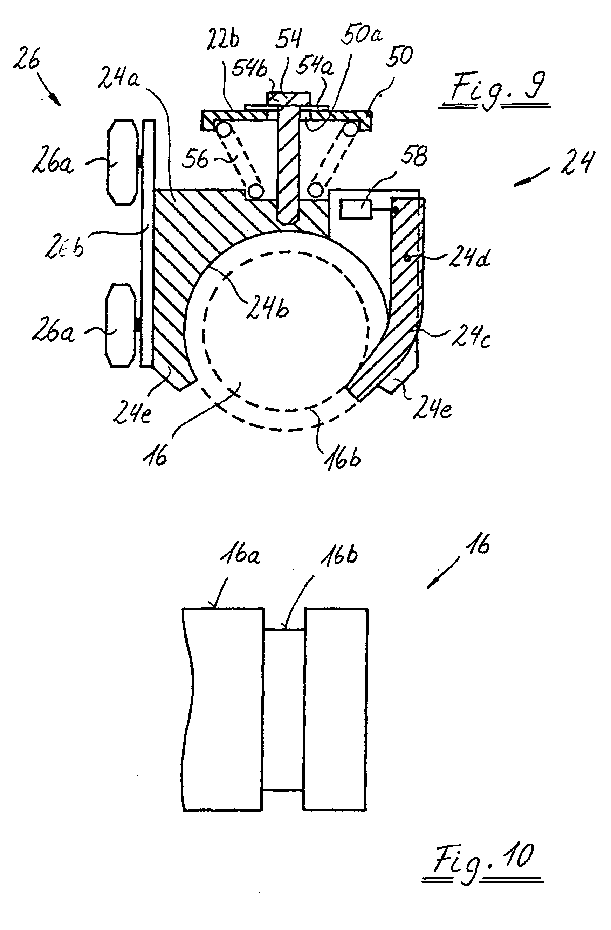

Am freien Ende 22b des Roboterarms 22 ist eine Greifervorrichtung 24 angebracht, welche zumindest innerhalb gewisser Grenzen bezüglich des Roboterarms 22 in allen Raumrichtungen frei schwenkbar und somit beliebig orientierbar ist, wie weiter unten mit Bezug auf Fig. 9 noch näher erläutert werden wird. Die Greifervorrichtung 24 dient zum lösbaren Halten der zugseitigen Kupplungshälfte 16. An der Greifervorrichtung 24 ist ferner eine Anschlagvorrichtung 26 mit einer Rahmenplatte 26b und einer Mehrzahl daran angeordneter Rollen 26a vorgesehen (siehe auch Fig. 9). Die Anschlagvorrichtung 26 wirkt mit einer Gegenanschlagsvorrichtung 28 am Nachlauffahrzeug 14 zur Positionierung der zugseitigen Kupplungshälfte 16 auf der Kupplungsachse K und der Orientierung der zugseitigen Kupplungshälfte 16 in Richtung der Kupplungsachse K zusammen.

Die Gegenanschlagsvorrichtung 28 umfaßt ein Profilblech 30 mit einem ersten Profilabschnitt 30a, der im wesentlichen parallel zur Hochachse W und zur Querachse V des Nachlauffahrzeugs 14 verläuft, und einem zweiten Profilabschnitt 30b, der im wesentlichen parallel zur Längsachse U und zur Querachse V des Nachlauffahrzeugs 14 verläuft.

Die zugseitige Anschlagsvorrichtung 26 und die nachlaufseitige Gegenanschlagsvorrichtung 28 sind derart ausgebildet und angeordnet, daß die zugseitige Kupplungshälfte 16 dann, wenn die zugseitige Anschlagsvorrichtung 26 sowohl mit der Anschlagfläche 30a als auch mit der Anschlagfläche 30b in Eingriff ist, exakt auf der Kupplungsachse K positioniert und exakt in Richtung der Kupplungsachse K auf die nachlaufseitige Kupplungshälfte 18 zu orientiert ist.

Zur Herstellung des gekuppelten Zustands der beiden Kupplungshälften 16 und 18 kann beispielsweise wie folgt vorgegangen werden:

Ausgegangen wird von einem Zustand, in welchem das Zugfahrzeug 12 mit dem Nachlauffahrzeug 14 durch Einführen des Königszapfen 14a in den Aufnahmeschlitz der Sattelkupplung 12b bereits gekuppelt ist. In diesem für den Schleppbetrieb bis auf die Herstellung des gekuppelten Zustands der beiden Versorgungskupplungshälften 16 und 18 fahrbereiten Zustand können das Zugfahrzeug 12 und das Nachlauffahrzeug 14 eine in weiten Grenzen beliebige Relativstellung zueinander aufweisen. Beispielsweise können die Längsachsen X und U der beiden Teilfahrzeuge .12 und 14 sowohl bezüglich einer Verschwenkung um die Hochachse Z bzw. W miteinander einen Winkel α einschließen, der einen nicht verschwindenden Wert hat, als auch bezüglich einer Verschwenkung um die Querachsen Y bzw. V miteinander einen Winkel β einschließen, der einen nicht verschwindenden Wert aufweist. Solange die Werte der Winkel α und β innerhalb vorbestimmter Grenzen liegen, die sehr großzügig gewählt sein können und lediglich aufgrund des Kompromisses zwischen aufwendiger Konstruktion und wirtschaftlicher Vertretbarkeit begrenzt sind (beispielsweise: - 10° ≤ α ≤ 10°; -7° ≤ β ≤ 7°), kann mit Hilfe der erfindungsgemäßen Stellvorrichtung 20 der gekuppelte Zustand der beiden Kupplungshälften 16 und 18 hergestellt werden.

Hierzu wird die Greifervorrichtung 24 mit daran gehaltener zugseitiger Kupplungshälfte 16 mittels des Roboterarms 22 aus einer Parkvorrichtung 32 gelöst, die am Zugfahrzeug 12 befestigt ist und der Kupplungshälfte 16, dem Roboterarm 22 und der Greifervorrichtung 24 in einem Nachlauffahrzeug-freien Fahrzustand des Zugfahrzeug 12 Halt und somit Schutz vor Beschädigung bietet. Dann wird die Greifervorrichtung 24 mittels des Roboterarms 22 zum Anschlagblech 30 hin bewegt, bis die Rollen 26a mit der Anschlagfläche 30a in Eingriff treten. Liegen alle Rollen 26a mit ihren Stirnflächen an der Anschlagfläche 30a an, so ist die Greifervorrichtung 24 und somit auch die zugseitige Kupplungshälfte 16 bereits hinsichtlich einer Verkippung um die nachlaufseitige Hochachse W und die nachlaufseitige Querachse V richtig orientiert. Nunmehr wird die Greifervorrichtung 24 mittels des Roboterarms 22 nach oben, d.h. im wesentlichen in Richtung der nachlaufseitigen Hochachse W, bewegt, bis die obersten Rollen 26a mit der Anschlagsfläche 30b in Eingriff treten. Durch diesen Eingriff wird auch noch die korrekte Orientierung bezüglich einer Verschwenkung von Greifervorrichtung 24 bzw. zugseitiger Kupplungshälfte 16 um die nachlaufseitige Längsachse U sichergestellt. Darüber hinaus sind das Profilblech 30 und die Anschlagvorrichtung 26 derart angeordnet und bemessen, daß die zugseitige Kupplungshälfte 16 dann, wenn sich die Rollen 26a sowohl mit der Anschlagfläche 30a als auch mit der Anschlagfläche 30b in vollem Eingriff befinden, exakt auf der Kupplungsachse K positioniert und bezüglich dieser exakt orientiert ist. Schließlich wird die Greifervorrichtung 24 mittels des Roboterarms 22 noch in Richtung der Querachse V des Nachlauffahrzeugs unter Aufrechterhaltung des Eingriffs der Rollen 26a mit den Anschlagflächen 30a und 30b bewegt, bis die Kupplungshälften 16 und 18 miteinander verbunden sind.

Es sei betont, daß mit Hilfe der erfindungsgemäßen Stellvorrichtung 20 lediglich drei der insgesamt fünf zur Positionierung der zugseitigen Kupplungshälfte 16 auf der Kupplungsachse K, zur Orientierung der Kupplungshälfte 16 in Richtung der Kupplungsachse K und zur Heranführung der zugseitigen Kupplungshälfte 16 längs der Kupplungsachse K an die nachlaufseitige Kupplungshälfte 18 erforderlichen Bewegungsachsen mittels gesonderter Stellantriebe bedient werden. Und zwar sind dies die die translatorische Bewegung der zugseitigen Kupplungshälfte 16 im Raum bewirkenden Bewegungsachsen. Die beiden restlichen, für die Orientierung der zugseitigen Kupplungshälfte 16 verantwortlichen Bewegungsachsen werden von den vorstehenden translatorischen Bewegungsmöglichkeiten in Zusammenwirken der Anschlagsvorrichtung 26 und der Gegenanschlagsvorrichtung 30 indirekt mitbedient.

Die vorstehende Herbeiführung des gekuppelten Zustands der beiden Kupplungshälften 16 und 18 kann unter der Beobachtung durch eine Bedienungsperson von dieser per Hand ferngesteuert werden. Vorteilhaft und in Verbindung mit einer automatisch fernbetätigbaren Sattelkupplung bevorzugt erfolgt das Verbinden der beiden Kupplungshälften 16 und 18 nach dem Schließen der Sattelkupplung 12b programmgesteuert automatisch. Es versteht sich von selbst, daß zur Erfassung bestimmter Zwischenstellungen, die die Greifervorrichtung 24 bzw. die zugseitige Kupplungshälfte 16 im Zuge der vorstehend geschilderten Bewegung einnimmt, eine Mehrzahl von Sensoren 23, beispielsweise Näherungsschalter oder Winkelmessungs-Sensoren, vorzusehen sind, deren Erfassungsignaleeiner Steuereinheit 21 über nicht dargestellte Signalleitungen oder über Funk-, Infrarotoder dergleichen Verbindungsstrecken zugeführt werden. Die Steuereinheit 21 gewinnt aus den ihr zugeführten Erfassungssignalen Informationen, welche zum einen die Einleitung der nächstfolgenden Bewegungsphase auslösen können bzw. Aussagen über die gegenwärtige Orientierung der Greifervorrichtung 24 bzw. der zugseitigen Kupplungshälfte 16 zulassen und bei der Steuerung des Roboterarms 22 berücksichtigt werden.

Nach Herstellen des gekuppelten Zustand der beiden Kupplungshälften 16 und 18 wird die Greifervorrichtung 24 von der zugseitigen Kupplungshälfte 16 gelöst und zurück zur Parkvorrichtung 22 bewegt, wo sie während des normalen Fahrbetriebs des Schleppzugs 10 verharrt.

Vor dem Abkuppeln des Nachlauffahrzeugs 14 vom Zugfahrzeug 12 wird die Greifervorrichtung 24 von der Parkvorrichtung 32 in der vorstehend beschriebenen Weise (diesmal allerdings ohne zugseitige Kupplungshälfte 16) zur nachlaufseitigen Kupplungshälfte 18 hin bewegt, wo sie die zugseitige Kupplungshälfte 16 ergreift, den gekuppelten Zustand der beiden Kupplungshälften 16 und 18 aufhebt und anschließend zusammen mit der zugseitigen Kupplungshälfte wieder zur Parkvorrichtung 32 zurückkehrt.

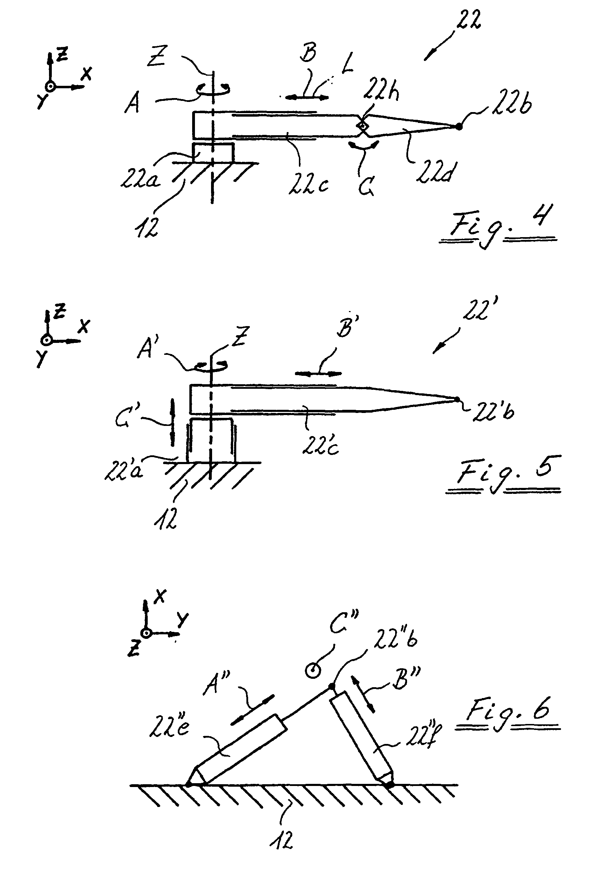

Nachzutragen ist noch, daß das Profilblech 30 gemäß Fig. 2 und 3 ferner einen Blechstreifen 30c umfaßt, der sich vom freien Ende des Profilabschnitts 30b aus nach unter erstreckt und mit diesem und einem Teil des Profilabschnitts 30a eine Schiene bildet, in der zumindest einige der Rollen 26a aufgenommen werden können. Diese Schiene erschwert es zumindest, daß die Anschlagsvorrichtung 26 mit der Gegenanschlagsvorrichtung wieder außer Eingriff treten kann.

Wie in Fig. 2 dargestellt ist, kann in einem Annäherungsbereich unmittelbar vor der nachlaufseitigen Kupplungshälfte 18 eine weitere Schiene 30d vorgesehen sein, welche ihrerseits zur Aufnahme einiger der Rollen 26a dient und zusammen mit der Schiene 30c ein unbeabsichtigtes Aufheben des Eingriffs der beiden Anschlagvorrichtungen 26 und 30 verhindert. Darüber hinaus kann vor der Schiene 30d auch noch eine Einweisschräge 30e für die Rollen 26a vorgesehen sein.

In Fig. 4 bis 6 sind grob schematisch drei verschiedene Möglichkeiten zur Ausbildung des Roboterarms 22 der XYZ-Stellvorrichtung, welche die translatorische Bewegung der Greifervorrichtung 24 im Raum bewerkstelligt, dargestellt:

Gemäß Fig. 4 umfaßt der Roboterarm 22 zwei Armteile 22c und 22d. Das Armteil 22c ist bei 22a am Zugfahrzeug 12 um dessen Hochachse Z verschwenkbar angeordnet. Dieser Verstellmöglichkeit A ist beispielsweise ein elektromotorischer Antrieb zugeordnet. Darüber hinaus ist das Armteil 22c längenveränderlich ausgebildet. Dieser Verstellmöglichkeit B ist wiederum ein elektromotorischer Antrieb, beispielsweise ein Spindeltrieb zugeordnet. Die der Verstellmöglichkeit B zugeordnete Längungsrichtung L verläuft im wesentlichen orthogonal zur Hochachse Z des Zugfahrzeugs 12. Schließlich ist das zweite Armteil 22d am ersten Armteil 22c verschwenkbar angelenkt, wobei die Schwenkachse 22h dieser Verstellmöglichkeit C sowohl zur Schwenkachse Z der Verstellmöglichkeit A als auch zur Längungsrichtung L der Verstellmöglichkeit B im wesentlichen orthogonal verläuft. Auch der Verstellmöglichkeit C ist ein motorischer Antrieb zugeordnet.

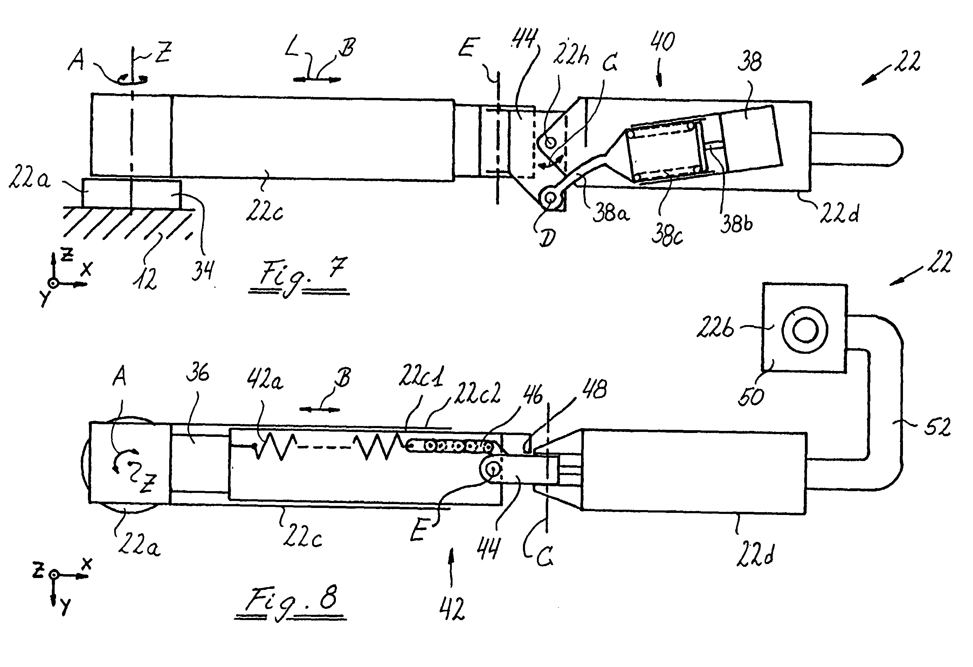

Eine konstruktiv detailliertere Ausführungsform des Roboterarms 22 gemäß Fig. 4 wird weiter unten anhand der Fig. 7 und 8 näher erläutert werden.

Bei der Ausführungsform gemäß Fig. 5 weist der Roboterarm 22' lediglich ein einziges Armteil 22'c auf, das bei 22'a sowohl um die Hochachse Z des Zugfahrzeugs 12 verschwenkbar (Verstellmöglichkeit A) als auch in Richtung der Hochachse Z verschiebbar (Verstellmöglichkeit C') gelagert ist. Darüber hinaus ist das Armteil 22'c längenveränderlich ausgebildet (Verstellmöglichkeit B').

Bei der Ausführungsform gemäß Fig. 6 ist das freie Ende 22"b mittels zweier längenveränderlicher und am Zugfahrzeug 12 schwenkbar angelenkter Stelleinheiten 22"e und 22"f in Richtung der Längsachse X und der Querachse Y des Zugfahrzeugs 12 bewegbar (Verstellmöglichkeiten A" und B"). Eine Bewegung des freien Endes 22"b in Richtung der Hochachse Z kann beispielsweise durch eine höhenverschiebbare Anlenkung der Stelleinheiten 22"e und 22"f am Zugfahrzeug 12 ermöglicht werden (Verstellmöglichkeit C").

In Fig. 7 und 8 ist der Roboterarm 22 in der Ausführung gemäß Fig. 4 detaillierter dargestellt. Der Roboterarm 22 ist am Zugfahrzeug 12 bei 22a um die Hochachse Z schwenkbar angelenkt. Die Schwenkbewegung wird mittels eines Elektromotors 34 unter Einfluß einer nicht dargestellten Steuereinheit gesteuert. Darüber hinaus ist das um die Hochachse Z des Zugfahrzeugs 12 schwenkbar angelenkte Armteil 22c längenveränderlich ausgebildet (Verstellmöglichkeit B). Das Armteil 22c umfaßt hierzu, wie insbesondere in Fig. 8 detaillierter dargestellt ist, zwei teleskopisch aneinander geführte Rohre 22c1 und 22c2, wobei eine Verschiebung der beiden Rohre relativ zueinander durch einen elektromotorischen Spindeltrieb 36 unter der Steuerung der vorstehend angesprochenen Steuereinheit bewerkstelligt wird.

Schließlich ist an dem einen Armteil 22c ein weiteres Armteil 22d um eine zur Längungsrichtung L und zur Hochachse Z des Zugfahrzeugs 12 orthogonal verlaufende Achse 22h schwenkbar angelenkt, wobei die Schwenkbewegung des Armteils 22d unter dem Einfluß eines elektromotorischen Spindeltriebs 38 erfolgt, dessen Ausgangselemten 38a in einem vorbestimmten Abstand von der Schwenkachse 22h bei D an dem einen Armteil 22c angreift. Auf die genaue Ausbildung des Spindeltriebs, genauer gesagt dessen Stellelement, wird nachfolgend noch näher einzugehen sein.

Darüber hinaus umfaßt der Roboterarm 22 zwei Vorspanneinrichtungen 40 und 42, die zum eine die Steuerung der Bewegung des freien Endes 22b des Roboterarms 22 insbesondere dann erleichtern, wenn sich die Greifervorrichtung 24, genauer gesagt deren Anschlagvorrichtung 26, in Eingriff mit der am Nachlauffahrzeug 14 angeordneten Gegenanschlagvorrichtung 30 befindet, und zum anderen einen dauerhaften Eingriff der beiden Anschlagvorrichtungen 26 und 30 sicherstellen.

Die Vorspannvorrichtung 40 ist durch spezielle Ausbildung der Stelleinheit des Stellantriebs 38 realisiert. Und zwar ist zwischen dem eigentlichen Stellelement 38b des Stellantriebs 38 und dessen am Armteil 22c bei D angelenkten Ausgangselement 38a, eine Feder 38c angeordnet. Die Federcharakteristik der Feder 38c ist derart gewählt, daß sie normalerweise trotz der Last sowohl des Armteils 22d selbst als auch der Greifervorrichtung 24 als auch der hiervon gehaltenen zugseitigen Kupplungshälfte 16 ein starres Verbindungselement zwischen dem eigentlichen Stellelement 38b und dem Ausgangsteil 38a darstellt, daß sie aber dann, wenn die Anschlagsvorrichtung 26 mit der Anschlagsfläche 30b der Gegenanschlagvorrichtung 30 in Eingriff getreten ist, bei weiterem Ausfahren des eigentlichen Stellelements 38b des Stellantriebs 38 komprimiert werden kann und so die Greifervorrichtung 24 bzw. deren Anschlagvorrichtung 26 gegen die Anschlagsfläche 30b vorspannt.

Somit besteht auch dann, wenn die Stellbewegung des Roboterarms 22 gegen die Anschlagfläche 30b nicht präzise gesteuert wird, aufgrund der Pufferwirkung der Feder 38c nicht die Gefahr einer Beschädigung des Roboterarms 22. Im Gegenteil ist eine gewisse Kompression der Feder 38c sogar erwünscht, um aufgrund der Vorspannung der Feder 38c auch die Annäherungsbewegung der zugseitigen Kupplungshälfte 16 längs der Kupplungsachse K an die nachlaufseitige Kupplungshälfte 18 nicht so präzise steuern zu müssen. Selbstverständlich kann anstelle der einen in Fig. 7 dargestellten Feder 38c zur Erzielung der gewünschten Federcharakteristik bzw. des gewünschten Hubwegs eine mehrere Federn umfassende Federanordnung vorgesehen sein.

Um das Armteil 22d bzw. die darin angeordnete Greifervorrichtung 24, genauer gesagt deren Anschlagsvorrichtung 26, auch gegen die Anschlagfläche 30a der nachlaufseitigen Anschlagvorrichtung 30 vorspannen zu können, ist das Armteil 22d an dem Armteil 22c nicht nur um die Achse 22h schwenkbar angelenkt, sondern auch um eine zur Hochachse Z des Zugfahrzeugs 12 parallel verlaufende Achse E, wobei dieser letztgenannten Schwenkmöglichkeit wiederum eine Vorspannfeder 42a zugeordnet ist. Die Feder 42a spannt das Armteil 22d in eine Stellung vor, in welcher es in Draufsicht gemäß Fig. 8 das Armteil 22c geradlinig fortsetzt. Wie in den Fig. 7 und 8 zu erkennen ist, ist das Armteil 22d nicht unmittelbar am Armteil 22c angelenkt, sondern an einem mit diesem verbundenen und relativ zu diesem um die Achse E schwenkbaren Teil 44. An diesem Zwischenteil 44 ist seitlich ein Kettenabschnitt 46 befestigt, an dessen freien Ende die Vorspannfeder 42a angreift. Mit ihrem anderen Ende ist die Feder 42a an dem inneren Teleskoprohr 22c1 des Armteils 22c befestigt. Bei Verschwenken des Armteils 22d und somit des Zwischenteils 44 um die Achse E ausgehend von der "geradlinigen" Stellung gemäß Fig. 8 im Uhrzeigersinn wird die Feder 42a gespannt und versucht das Armteil 22d in die geradlinige Stellung zurückzuführen, in welcher das Zwischenteil 44 an einem Anschlag 48 des inneren Teleskoprohrs 22c1 des Armteils 22c anschlägt.

Gelangt die Greifervorrichtung 24 bzw. deren Anschlagvorrichtung 26 durch Verschwenken des Roboterarms 22 um die Hochachse Z unter dem Einfluß des Stellantriebs 34 mit der nachlaufseitigen Anschlagfläche 30a in Eingriff, und wird der Stellantrieb 34 nicht sofort abgestellt, so resultiert hieraus ein Verschwenken des Armteils 22d die Achse E relativ zum Armteil 22c unter Spannung der Feder 42a. Auch die Feder 42a stellt somit eine gewisse Pufferwirkung bereit, welche zum einen den Roboterarm 22 vor Beschädigung infolge unpräziser Steuerung bewahrt und zum anderen die Steuerung der Annäherungsbewegung der Greifervorrichtung 24 bzw. der zugseitigen Kupplungshälfte 16 längs der Kupplungsachse K an die nachlaufseitige Kupplungshälfte 18 erleichtert, wie dies vorstehend bereits für die Feder 38c näher erläutert worden ist.

Abschließend soll anhand von Fig. 9 noch die Ausbildung und Anordnung der Greifervorrichtung 24 näher erläutert werden. Am freien Ende 22b des Roboterarms 22 ist eine Platte 50 angeordnet, welche mit dem zweiten Armteil 22d über einen Winkelstab 52 verbunden ist (siehe Fig. 8). Die Platte 50 umfaßt ein Loch 50a, welches von einem Bolzen 54 mit Spiel durchsetzt ist. Der Bolzen 54 ist mittels einer Beilagscheibe 54a daran gehindert, mit seinem Kopf 54b durch das Loch 50a hindurchzutreten. Darüber hinaus ist der Bolzen 54 an einem Basisteil 24a der Greifervorrichtung 24 befestigt. Aufgrund des Spiels zwischen dem das Loch 50a durchsetzten Bolzen 54 und der Platte 50 kann das Basisteil 24a und somit die gesamte Greifervorrichtung 24 relativ zur Platte 50a und somit zum Roboterarm 22 innerhalb gewisser Grenzen in jeder beliebigen Raumrichtung verschwenkt werden. Eine zwischen der Platte 50 und dem Basisteil 24a angeordnete Schraubenspiralfeder 56 spannt das Basisteil 24a der Greifervorrichtung 24 in eine vorbestimmte Nullage vor.

In dem Basisteil 24a ist eine Aufnahme 24b für die zugseitige Kupplungshälfte 16 vorgesehen, deren Umriß im wesentlichen dem Außenumriß 16a (siehe Fig. 10) der zugseitigen Kupplungshälfte 16 entspricht. Ferner ist eine Greiferklaue 24c bei 24d an dem Basisteil 24a der Greifervorrichtung 24 angelenkt und kann mittels eines Stellantriebs 58 zwischen einer (nicht dargestellten) Freigabestellung und der in Fig. 9 dargestellten Haltestellung verstellt werden. In der Haltestellung gemäß Fig. 9 greift die Greiferklaue 24c in eine Ausnehmung 16b der zugseitigen Kupplungshälfte 16 ein und verhindert so ein Herausrutschen der Kupplungshälfte 16 aus der Aufnahme 24b in einer zur Zeichenebene der Fig. 9 orthogonal verlaufenden Richtung. Ein Herausrutschen der zugseitigen Kupplungshälfte 16 in Fig. 9 nach unten aus der Aufnahme 24b heraus wird durch die Schenkel 24e des Basisteil 24a der Greifervorrichtung 24 verhindert, welche derart bemessen sind, daß die Aufnahme 24b sich über einen Umfangswinkel von deutlich mehr als 180° erstreckt. Befindet sich die Greiferklaue 24c in der in Fig. 9 dargestellten Haltestellung, so ist die zugseitige Kupplungshälfte 16 sicher in der Greifervorrichtung 24 gehalten. In Fig. 9 ist ferner der Rahmen 26b der zugseitigen Anschlagvorrichtung 26 dargestellt, der am Basisteil 24a der Greifervorrichtung 24 befestigt ist. Ferner erkennt man in Fig. 9 einige der Rollen 26a der zugseitigen Anschlagvorrichtung 26, die an dem Rahmen 26b drehbar gelagert sind.

## Patentansprüche

1. Schleppzug (10) umfassend:
zwei Teilfahrzeuge, nämlich ein Zugfahrzeug (12) und ein Nachlauffahrzeug (14),
eine Schleppkupplung (12b) zur Herstellung einer gelenkigen Zug- und Schubverbindung zwischen den beiden Teilfahrzeugen (12, 14),
eine Versorgungskupplung (16/18) zwischen den beiden Teilfahrzeugen (12, 14) mit einer zugfahrzeugseitigen (im folgenden verkürzt "zugseitigen") Kupplungshälfte (16) und einer nachlauffahrzeugseitigen (im folgenden verkürzt "nachlaufseitigen") Kupplungshälfte (18) welche durch Zusammenführen längs einer vorbestimmten Kupplungsachse (K) miteinander kuppelbar sind,
wobei eine der Kupplungshälften (16) mit dem Versorgungsteil des zugehörigen einen Teilfahrzeugs (12) durch eine flexible Versorgungsleitung (16d) verbunden und in dem mit der jeweils anderen Kupplungshälfte (18) gekuppelten Zustand relativ zu dem einen Teilfahrzeug (12) in solcher Weise beweglich ist, daß Relativbewegungen der beiden Teilfahrzeuge (12, 14) im wesentlichen nicht behindert sind,
wobei an dem einen Teilfahrzeug (12) eine Stellvorrichtung (20) angeordnet ist, welche die eine Kupplungshälfte (16) an die andere Kupplungshälfte (18) annähert und mit dieser längs der vorbestimmten Kupplungsachse (K) zusammenführt, **dadurch gekennzeichnet, daß** die eine Kupplungshälfte (16) an der Stellvorrichtung (20) zumindest innerhalb vorbestimmter Grenzen in allen Raumrichtungen orientierbar angeordnet ist.

2. Schleppzug nach Anspruch 1,
**dadurch gekennzeichnet, daß** am anderen Teilfahrzeug ( 14) Positionierungs- und Orientierungs-Hilfsmittel (30) angebracht sind, welche die Positionierung der einen Kupplungshälfte (16) auf der Kupplungsachse (K) und die Orientierung der einen Kupplungshälfte (16) in Richtung auf die andere Kupplungshälfte (18) zu erleichtern.

3. Schleppzug nach Anspruch 2,
**dadurch gekennzeichnet, daß** die Positionierungs- und Orientierungs-Hilfsmittel (30) zwei zu der vorbestimmten Kupplungsachse (K) und vorzugsweise auch zueinander orthogonal verlaufende Anschlagflächen (30a, 30b) umfaßt und daß an der einen Kupplungshälfte oder einem mit dieser verbindbaren Teil (24) mit den Anschlagflächen (30a, 30b) zusammenwirkende Gegenanschläge (26a) vorgesehen sind.

4. Schleppzug nach Anspruch 3,
**dadurch gekennzeichnet, daß** die Anschlagflächen (30a, 30b) von den zueinander vorzugsweise orthogonal verlaufenden Flächen eines Profilblechs (30), beispielsweise eines Winkelblechs, gebildet sind.

5. Schleppzug nach einem der Ansprüche 1 bis 4,
**dadurch gekennzeichnet, daß** Sicherungsmittel (30c), beispielsweise in Form einer Sicherungsfläche, vorgesehen sind, welche nach Positionierung der einen Kupplungshälfte (16) auf der Kupplungsachse (K) ein Wiederentfernen dieser Kupplungshälfte (16) von der Kupplungsachse (K) wenigstens in einer Raumrichtung (U) zumindest erschweren.

6. Schleppzug nach den Ansprüchen 4 und 5,
**dadurch gekennzeichnet, daß** die Sicherungsmittel von einem Blechstreifen (30c) gebildet sind, der von einem der Profilabschnitte (30b) des Profilblechs (30) ausgeht und sich vorzugsweise im wesentlichen parallel zu dem jeweils anderen Profilabschnitt (30a) des Profilblechs (30) erstreckt.

7. Schleppzug nach Anspruch 6,
**dadurch gekennzeichnet, daß** in einem Annäherungsbereich unmittelbar vor der weiteren Kupplungshälfte (18) weitere Sicherungsmittel (30d) vorgesehen sind, welche, beispielsweise in Zusammenwirken mit den einen Sicherungsmitteln (30c), eine Bewegung der einen Kupplungshälfte (16) lediglich in Richtung der Kupplungsachse (K) zulassen.

8. Schleppzug nach Anspruch 7,
**dadurch gekennzeichnet, daß** die weiteren Sicherungsmittel von einem weiteren Blechstreifen (30d) gebildet sind, der von dem anderen Profilabschnitt (30a) des Profilblechs (30) ausgeht, vorzugsweise einem Winkelblech, dessen freier Schenkel sich auf den einen Blechstreifen (30c) zu erstreckt.

9. Schleppzug nach Anspruch 8,
**dadurch gekennzeichnet, daß** an dem von der anderen Kupplungshälfte (18) entfernten Ende des weiteren Blechstreifens (30d) eine Einweisschräge (30e) ausgebildet oder angeordnet ist.

10. Schleppzug nach einem der Ansprüche 1 bis 9,
**dadurch gekennzeichnet, daß** die Stellvorrichtung (20) einen an dem einen Teilfahrzeug (12) angelenkten Roboterarm (22) mit wenigstens zwei relativ zueinander verschwenkbaren Armteilen (22c, 22d) umfaßt, wobei die eine Kupplungshälfte (16) an dem freien Ende (22b) des Roboterarms (22) anordenbar ist.

11. Schleppzug nach Anspruch 10,
**dadurch gekennzeichnet, daß** der Roboterarm (22) an dem einen Teilfahrzeug (12) um dessen Hochachse (Z) schwenkbar angebracht ist, wobei vorzugsweise dieser Verstellmöglichkeit (A) ein Stellantrieb (34) zugeordnet ist.

12. Schleppzug nach Anspruch 10 oder 11,
**dadurch gekennzeichnet, daß** wenigstens zwei Armteile (22c, 22d) des Roboterarms (22) relativ zueinander um eine zur Hochachse (Z) des einen Teilfahrzeugs (12) im wesentlichen orthogonal verlaufende Achse (22h) verschwenkbar sind, wobei vorzugsweise dieser Verstellmöglichkeit (C) ein Stellantrieb (38) zugeordnet ist.

13. Schleppzug nach einem der Ansprüche 10 bis 12,
**dadurch gekennzeichnet, daß** der Roboterarm (22) wenigstens ein längenveränderliches Armteil (22c) umfaßt, wobei die Längungsrichtung vorzugsweise sowohl zur Hochachse (Z) des einen Teilfahrzeugs (12) als auch zur Relativschwenkachse (22h) der wenigstens zwei Armteile (22c, 22d) im wesentlichen orthogonal verläuft, und wobei dieser Verstellmöglichkeit (B) vorzugsweise ein Stellantrieb (36) zugeordnet ist.

14. Schleppzug nach einem der Ansprüche 10 bis 13,
**dadurch gekennzeichnet, daß** der Roboterarm (22) wenigstens eine Vorspannvorrichtung (40, 42) umfaßt, welche das freie Ende des Roboterarms (22b) in den beiden orthogonal zur Kupplungsachse (K) verlaufenden Richtungen (U, W), insbesondere auf die beiden Anschlagflächen (30a, 39b) zu, vorspannt.

15. Schleppzug nach Anspruch 14,
**dadurch gekennzeichnet, daß** zwischen den beiden Armteilen (22c, 22d) zusätzlich zu dem Schwenkgelenk (C) mit der orthogonal zur Hochachse (Z) verlaufenden Schwenkachse (22h) ein weiteres Schwenkgelenk (E) vorgesehen ist, dessen eines Gelenkteil (44) gegen einen Anschlag (48) des anderen Gelenkteils (22c1) vorgespannt ist.

16. Schleppzug nach Anspruch 14 oder 15,
**dadurch gekennzeichnet, daß** wenigstens ein Stellantrieb (38) zwischen einem mit der Antriebseinheit des Stellantriebs (38) verbundenen Abtriebselement (38b) und einem relativ zu dem Abtriebselement (38b) verstellbar geführten Ausgangselement (38a) eine Federanordnung (38c) umfaßt.

17. Schleppzug nach einem der Ansprüche 10 bis 16,
**dadurch gekennzeichnet, daß** an dem freien Ende (22b) des Roboterarms (22) eine Greifervorrichtung (24) angeordnet ist, die vorzugsweise zumindest innerhalb vorbestimmter Grenzen in allen Raumrichtungen orientierbar angeordnet ist, mittels derer die eine Kupplungshälfte (16) am Roboterarm (22) lösbar anordenbar ist.

18. Schleppzug nach Anspruch 17,
**dadurch gekennzeichnet, daß** die Greifervorrichtung (24) eine Aufnahme (24b) für die eine Kupplungshälfte (16) umfaßt sowie eine verstellbare Greiferklaue (24d), welche zum Halten der einen Kupplungshälfte (16) mit einer Halteausnehmung (16b) der einen Kupplungshälfte (16) in Eingriff bringbar ist.

19. Schleppzug nach Anspruch 17 oder 18,
**dadurch gekennzeichnet, daß** an der Greifervorrichtung (24) eine Gegenanschlagsvorrichtung (26) vorgesehen ist, welche zum Zusammenwirken mit einer Anschlagsvorrichtung (30a, 30b) der Positionierungs- und Orientierungs-Hilfsmittel (30) bestimmt ist.

20. Schleppzug nach Anspruch 19,
**dadurch gekennzeichnet, daß** die Gegenanschlagsvorrichtung (26) einen Rahmen (26b) mit wenigstens drei Anschlagspunkten und gewünschtenfalls einer Mehrzahl von an dem Rahmen (26b) drehbar gelagerten Rollen (26a) umfaßt.

21. Schleppzug nach einem der Ansprüche 17 bis 20,
**dadurch gekennzeichnet, daß** an der Greifervorrichtung (24) ein Bolzen (54) befestigt ist, welcher eine am freien Ende (22b) des Roboterarms (22) vorgesehene Öffnung (50a) mit Spiel durchsetzt, wobei der Bolzen (54) vorzugsweise von einer Spiral- oder/und Schraubenfeder (56) umgeben ist, die sich einenends an der Greifervorrichtung (54) und andernends am Roboterarm (22) abstützt.

22. Schleppzug nach einem der Ansprüche 1 bis 21,
**dadurch gekennzeichnet, daß** an dem einen Teilfahrzeug (12) eine Parkvorrichtung (32) für die Stellvorrichtung (20) und gegebenenfalls die eine Kupplungshälfte (16) vorgesehen ist.

23. Schleppzug nach einem der Ansprüche 1 bis 22,
**dadurch gekennzeichnet, daß** die andere Kupplungshälfte (18) am zugehörigen anderen Teilfahrzeug (14) fest angeordnet ist.

24. Schleppzug nach einem der Ansprüche 1 bis 23,
**dadurch gekennzeichnet, daß** die Stellvorrichtung (20) am Zugfahrzeug (12) vorgesehen ist, daß die Positionierungs- und Orientierungs-Hilfsmittel (30) am Nachlauffahrzeug (14) angebracht sind, daß die andere Kupplungshälfte (18) am Nachlauffahrzeug (14) angeordnet ist, und daß die eine Kupplungshälfte (16) mit dem Versorgungsteil des Zugfahrzeugs (12) durch eine flexible Versorgungsleitung (16d) verbunden ist.

25. Schleppzug nach einem der Ansprüche 1 bis 24,
**dadurch gekennzeichnet, daß** zur Steuerung der Bewegung der Stellvorrichtung (20) und gewünschtenfalls der Greifervorrichtung (24) eine Steuereinheit (21) vorgesehen ist.

26. Schleppzug nach Anspruch 25,
**dadurch gekennzeichnet, daß** eine Mehrzahl von Sensoren (23) vorgesehen ist zur Erfassung einer momentanen Stellung von Stellvorrichtung (20) und gewünschtenfalls Greifervorrichtung (24) sowie zur Ausgabe entsprechender Erfassungssignale an die Steuereinheit (21).

## Claims

1. A tractor-train (10) comprising:
two component vehicles, namely a tractor vehicle (12) and a trailer vehicle (14),
a tractor coupling (12b) to form an articulated push/pull connection between the two component vehicles (12,14),
and a supply coupling (16/18) between the two component vehicles (12,14) having a coupling half (16) on the tractor vehicle side (abbreviated to "tractor side") and a coupling half on the trailer vehicle side (abbreviated to "trailer side" below) which can be coupled together by bringing them together along a predefined coupling axis (K),
wherein one of the coupling halves is connected to a supply part of the associated component vehicle (12) through a flexible supply line (16d) and when coupled to the respective other coupling half (18) is movable relative to the component vehicle (12) in such a way that relative movements of the two component vehicles (12,14) are essentially unhindered, and
wherein an actuator (20) is arranged on the component vehicle (12) that moves the coupling half (16) towards the other coupling half (18) and joins the coupling halves together along the predefined coupling axis (K), **characterised in that** the coupling half (16) is arranged on the actuator (20) so that it can be oriented in all spatial directions within predetermined limits.

2. A tractor-train according to Claim 1, **characterised in that** positioning and orientation means (30) are mounted on the other component vehicle (14), which facilitate the positioning of the coupling half (16) on the coupling axis (K) and also the orientation of the coupling half (16) towards the other coupling half (18).

3. The tractor-train according to Claim 2, **characterised in that** the positioning and orientation means (30) comprise two stop faces (30a,30b) extending at right angles to the predefined coupling axis (K) and preferably also to one another, and **in that** counterstops (26a) which co-operate with the stop faces (30a,30b) are provided on one of the coupling halves or on a part (24) which can be connected thereto.

4. A tractor-train according to Claim 3, **characterised in that** the stop faces (30a,30b) are formed by the surfaces of a profile sheet (30), for example an angle sheet, which surfaces preferably extend at right angles to one another.

5. A tractor-train according to any one of Claims 1 to 4, **characterised in that** securing means (30c) are provided, for example in the form of a retaining surface, which at least make it more difficult to remove the coupling half (16) from the coupling axis (K) in at least one direction after said coupling half (16) has been positioned on the coupling axis (K).

6. A tractor-train according to Claims 4 and 5, **characterised in that** the securing means take the form of a first sheet metal strip (30c) which extends from one of the profile sections (30b) of the profile sheet (30) and extends preferably essentially parallel to the respective other profile section (30a) of the profile sheet (30) .

7. A tractor-train according to Claim 6, **characterised in that** additional securing means (30d) are provided in an approach area directly in front of the other coupling half (18) which, for example in co-operation with the securing means (30c), enable the coupling half (16) to move only in the direction of the coupling axis (K).

8. A tractor-train according to Claim 7, **characterised in that** the additional securing means are formed by a further sheet metal strip (30d) which extends from the other profile section (30a) of the profile sheet (30), preferably an angle sheet, whose free arm extends towards the first sheet metal strip (30c).

9. A tractor-train according to Claim 8, **characterised in that** a guide slope (30e) is formed or mounted on the end of the further sheet metal strip (30d) remote from the other coupling half (18).

10. A tractor-train according to any one of Claims 1 to 9, **characterised in that** the actuator (20) comprises a robot arm (22) articulated on one component vehicle (12) and having at least two arm sections (22c,22d) that can rotate relative to one another, wherein the coupling half (16) can be disposed on the free end (22b) of the robot arm (22).

11. A tractor-train according to Claim 10, **characterised in that** the robot arm (22) is attached to component vehicle (12) so that it can pivot about its vertical axis (Z), wherein an actuating mechanism (34) is preferably associated with this adjustment possibility (A).

12. A tractor-train according to Claim 10 or 11, **characterised in that** at least two arm sections (22c,22d) of the robot arm (22) are pivotable relative to one another about an axis (22h) extending essentially perpendicular to the vertical axis (Z) of the component vehicle (12), wherein an actuating mechanism (38) is preferably associated with this adjustment possibility (C).

13. A tractor-train according to any one of Claims 10 to 12, **characterised in that** the robot arm (22) comprises at least one adjustable-length arm section (22c), wherein the direction of extension preferably extends substantially perpendicular both to the vertical axis (Z) of the component vehicle (12) and to the axis (22h) of relative rotation of the at least two arm sections (22c,22d), and wherein preferably an actuating mechanism (36) is associated with this adjustment possibility (B).

14. A tractor-train according to any one of Claims 10 to 13, **characterised in that** the robot arm (22) comprises at least one preloading device (40,42) which preloads the free end of the robot arm (22b) in the two directions (U,W) extending perpendicular to the coupling axis (K), in particular towards the two stop faces (30a,30b).

15. A tractor-train according to Claim 14, **characterised in that** a further swivel joint (E), one joint part (44) of which is preloaded against a stop (48) of the other joint part (22c1), is provided between two arm sections (22c,22d) additionally to the swivel joint (C) with the swivel axis (22h) extending perpendicular to the vertical axis (Z).

16. A tractor-train according to Claim 14 or 15, **characterised in that** at least one actuating mechanism (38) comprises a spring arrangement (38c) between a driven element (38b) connected to the drive unit of the actuating mechanism (38) and an output element (38a) guided adjustably relative to the driven element (38b).

17. A tractor-train according to any one of Claims 10 to 16, **characterised in that** a gripper device (24) is arranged at the free end (22b) of the robot arm (22) and is preferably arranged so it can be oriented in all spatial directions at least within predefined limits, and by means of which the coupling half (16) can be detachably arranged on the robot arm (22).

18. A tractor-train according to Claim 17, **characterised in that** the gripper device (24) comprises a receptacle (24b) for the coupling half (16), as well as an adjustable gripper claw (24d) which for retaining the coupling half (16) can be brought into engagement with a retaining recess (16b) of the coupling half (16).

19. A tractor-train according to Claim 17 or 18, **characterised in that** a counterstop device (26) is provided on the gripper device (24), which is intended to co-operate with a stop device (30a,30b) of the positioning and orientation means (30).

20. A tractor-train according to Claim 19, **characterised in that** the counterstop device (26) comprises a frame (26b) with at least three stop points and, if desired, a plurality of rollers (26a) mounted rotatably on the frame (26b).

21. A tractor-train according to any one of Claims 17 to 20, **characterised in that** a pin (54) is fastened to the gripper device (24) that passes with clearance through an opening (50a) provided in the free end (22b) of the robot arm (22), wherein the pin (54) is surrounded by a spiral and/or helical spring (56) that bears against the gripper device (54) at one end and against the robot arm (22) at the other end.

22. A tractor-train according to any one of Claims 1 to 21, **characterised in that** a parking device (32) is provided on one component vehicle (12) for the actuator (20) and, optionally, the coupling half (16).

23. A tractor-train according to any one of Claims 1 to 22, **characterised in that** the other coupling half (18) is rigidly mounted on the associated other component vehicle (14).

24. A tractor-train according to any one of Claims 1 to 23, **characterised in that** the actuator (20) is provided on the tractor vehicle, **in that** the positioning and orientation means (30) are mounted on the trailer vehicle (14), **in that** the other coupling half (18) is arranged on the trailer vehicle (14), and **in that** the coupling half (16) is connected to the supply unit of the tractor vehicle (12) through a flexible supply line (16d).

25. A tractor-train according to any one of Claims 1 to 24, **characterised in that** a control unit (21) is provided to control the movement of the actuator (20) and, if desired, the gripper device (24).

26. A tractor-train according to Claim 25, **characterised in that** a plurality of sensors (23) are provided to determine the instantaneous position of the actuator (20) and, if desired, the gripper device (24), and for the output of corresponding sensor signals to the control unit (21).

## Revendications

1. Ensemble routier (10) comprenant :
deux semi-véhicules, à savoir un véhicule tracteur (12) et un véhicule remorqué (14),
un accouplement de remorquage (12b) pour établir une liaison en traction et en poussée articulée entre les deux semi-véhicules (12, 14),
un accouplement d'alimentation (16/18) entre les deux semi-véhicules (12, 14) avec une moitié d'accouplement (16) du côté du véhicule tracteur (désigné ci-après en abrégé par le terme "côté tracteur") et une moitié d'accouplement (18) du côté du véhicule remorqué (désigné ci-après en abrégé par le terme "côté remorqué") qui peuvent être accouplées l'une avec l'autre par la réunion le long d'un axe d'accouplement prédéterminé (K),
dans lequel l'une des moitiés d'accouplement (16) est reliée à la partie alimentation du semi-véhicule correspondant (12) par un conduit d'alimentation souple (16d) et, à l'état accouplé à l'autre moitié d'accouplement respective (18), est déplaçable par rapport au semi-véhicule (12) de telle manière que les déplacements relatifs des deux semi-véhicules (12, 14) ne sont sensiblement pas entravés,
dans lequel un dispositif de réglage (20), qui rapproche une moitié d'accouplement (16) de l'autre moitié d'accouplement (18) et qui est réuni avec celle-ci le long de l'axe d'accouplement prédéterminé (K), est disposé dans l'un des semi-véhicules (12), **caractérisé en ce que** l'une des moitiés d'accouplement (16) est disposée sur le dispositif de réglage (20) de manière orientable dans toutes les directions dans l'espace au moins à l'intérieur de limites prédéterminées.

2. Ensemble routier selon la revendication 1, **caractérisé en ce que** des moyens auxiliaires de positionnement et d'orientation (30), qui facilitent le positionnement de l'une des moitiés d'accouplement (16) sur l'axe d'accouplement (K) et l'orientation de l'une des moitiés d'accouplement (16) dans la direction de l'autre moitié d'accouplement (18), sont montés sur l'autre semi-véhicule (14).

3. Ensemble routier selon la revendication 2, **caractérisé en ce que** les moyens auxiliaires de positionnement et d'orientation (30) comprennent deux surfaces de butée (30a, 30b) s'étendant orthogonalement par rapport à l'axe d'accouplement prédéterminé (K) et, de préférence, également l'une par rapport à l'autre et **en ce que** des contre-butées (28a) coopérant avec les surfaces de butée (30a, 30b) sont prévues dans l'une des moitiés d'accouplement ou dans une partie (24) raccordable à celle-ci.

4. Ensemble routier selon la revendication 3, **caractérisé en ce que** les surfaces de butée (30a, 30b) sont formées par les surfaces d'un profilé en tôle (30), par exemple une cornière en tôle, s'étendant, de préférence, orthogonalement l'une par rapport à l'autre.

5. Ensemble routier selon l'une des revendications 1 à 4, **caractérisé en ce qu'**il est prévu des moyens d'arrêt (30c), par exemple sous forme d'une surface d'arrêt qui, après le positionnement de l'une des moitiés d'accouplement (16) sur l'axe d'accouplement (K), rendent au moins difficile un nouvel éloignement de cette moitié d'accouplement (16) de l'axe d'accouplement (K) au moins dans une direction dans l'espace (U).

6. Ensemble routier selon les revendications 4 et 5, **caractérisé en ce que** les moyens d'arrêt (30c) sont formés par une bande de tôle (30c) qui part de l'un des tronçons de profilé (30b) du profilé en tôle (30) et qui s'étend, de préférence, sensiblement parallèlement à l'autre tronçon de profilé (30a) du profilé en tôle (30).

7. Ensemble routier selon la revendication 6, **caractérisé en ce que** d'autres moyens d'arrêt (30d), qui, par exemple en coopération avec l'un des moyens d'arrêt (30c), permettent un déplacement de l'une des moitiés d'accouplement (16) simplement dans la direction de l'axe d'accouplement (K), sont prévus dans une zone d'approche directement devant l'autre moitié d'accouplement (18).

8. Ensemble routier selon la revendication 7, **caractérisé en ce que** les autres moyens d'arrêt sont formés par une autre bande de tôle (30d) qui part de l'autre tronçon de profilé (30a) du profilé en tôle (30), de préférence une cornière en tôle, dont la branche libre s'étend vers la précédente bande de tôle (30c).

9. Ensemble routier selon la revendication 8, **caractérisé en ce qu'**une partie inclinée de guidage (30e) est formée ou disposée à l'extrémité de l'autre bande de tôle (30d) éloignée de l'autre moitié d'accouplement (18).

10. Ensemble routier selon l'une des revendications 1 à 9, **caractérisé en ce que** le dispositif de réglage (20) comprend un bras de robot (22) articulé sur l'un de semi-véhicules (12) avec au moins deux parties de bras (22c, 22d) pivotantes l'une par rapport à l'autre, l'une des moitiés d'accouplement (16) pouvant être disposée à l'extrémité libre (22b) du bras de robot (22).

11. Ensemble routier selon la revendication 10, **caractérisé en ce que** le bras de robot (22) est monté sur l'un des semi-véhicules (12) de manière à pivoter autour de l'axe vertical (Z) de celui-ci, un servomoteur (34) étant, de préférence, associé à cette possibilité d'ajustement (A).

12. Ensemble routier selon la revendication 10 ou 11, **caractérisé en ce qu'**au moins deux parties de bras (22c, 22d) du bras de robot (22) peuvent pivoter l'une par rapport à l'autre autour d'un axe (22h) s'étendant sensiblement orthogonalement par rapport à l'axe vertical (Z) de l'un des semi-véhicules (12), un servomoteur (38) étant, de préférence, associé à cette possibilité d'ajustement (C).

13. Ensemble routier selon l'une des revendications 10 à 12, **caractérisé en ce que** le bras de robot (22) comprend au moins une partie de bras (22c) variable en longueur, la direction d'allongement s'étendant, de préférence, sensiblement orthogonalement aussi bien par rapport à l'axe vertical (Z) de l'un des semi-véhicules (12) que par rapport à l'axe de pivotement relatif (22h) des aux moins deux parties de bras (22c, 22d) et un servomoteur (36) étant, de préférence, associé à cette possibilité d'ajustement (B).

14. Ensemble routier selon l'une des revendications 10 à 13, **caractérisé en ce que** le bras de robot (22) comprend au moins un dispositif de précontrainte (40, 42) qui met en précontrainte l'extrémité libre du bras de robot (22b) dans les deux directions (U, W) s'étendant orthogonalement par rapport à l'axe d'accouplement (K), en particulier en direction des deux surfaces de butée (30a, 30b).

15. Ensemble routier selon la revendication 14, **caractérisé en ce qu'**il est prévu, entre les deux parties de bras (22c, 22d), en plus de l'articulation pivotante (C) avec l'axe de pivotement (22h) s'étendant orthogonalement par rapport à l'axe vertical (Z), une autre articulation pivotante (E) dont une partie articulée (44) est précontrainte contre une butée (48) de l'autre partie articulée (22c1).

16. Ensemble routier selon la revendication 14 ou 15, **caractérise en ce qu'**au moins un servomoteur (38) comprend un dispositif de ressorts (38c) entre un élément mené (38b) relié à l'unité d'entraînement du servomoteur (38) et un élément de sortie (38a) monté de manière mobile par rapport à l'élément mené (38b).

17. Ensemble routier selon l'une des revendications 10 à 16, **caractérisé en ce qu'**un dispositif preneur (24), qui est, de préférence, disposé de manière orientable dans toutes les directions dans l'espace au moins à l'intérieur de limites prédéterminées, au moyen duquel l'une des moitiés d'accouplement (16) peut être montée de manière amovible sur le bras de robot (22), est disposé à l'extrémité libre (22b) du bras de robot (22).

18. Ensemble routier selon la revendication 17, **caractérisé en ce que** le dispositif preneur (24) comprend un logement (24b) pour l'une des moitiés d'accouplement (16) ainsi qu'une griffe preneuse (24d) réglable qui peut venir en prise dans un évidement de retenue (16b) de l'une des moitiés d'accouplement (16) pour retenir l'une des moitiés d'accouplement (16).

19. Ensemble routier selon la revendication 17 ou 18, **caractérisé en ce qu'**il est prévu sur le dispositif preneur (24) un dispositif de contre-butée (26) qui est conçu pour coopérer avec un dispositif de butée (30a, 30b) des moyens auxiliaires de positionnement et d'orientation (30).

20. Ensemble routier selon la revendication 19, **caractérisé en ce que** le dispositif de contre-butée (26) comprend un châssis (26b) avec au moins trois points de butée et, si on le souhaite, une pluralité de galets (26a) montés de manière tournante sur le châssis (28b).

21. Ensemble routier selon l'une des revendications 17 à 20, **caractérisé en ce qu'**un boulon (54), qui traverse avec un jeu une ouverture (50a) prévue à l'extrémité libre (22b) du bras de robot (22), est fixé au dispositif preneur (24), le boulon (54) étant, de préférence, entouré par un ressort spiral et/ou un ressort à boudin (56) qui s'appuie, à une extrémité, sur le dispositif preneur (24) et, à l'autre extrémité, sur le bras du robot (22).

22. Ensemble routier selon l'une des revendications 1 à 21, **caractérisé en ce qu'**un dispositif de rangement (32) est prévu sur l'un des semi-véhicules (12) pour le dispositif de réglage (20) et, éventuellement, pour l'une des moitiés d'accouplement (16).

23. Ensemble routier selon l'une des revendications 1 à 22, **caractérisé en ce que** l'autre moitié d'accouplement (18) est montée fixement sur l'autre semi-véhicule (14) associé.

24. Ensemble routier selon l'une des revendications 1 à 23, **caractérisé en ce que** le dispositif de réglage (20) est prévu sur le véhicule tracteur (12), **en ce que** les moyens auxiliaires de positionnement et d'orientation (30) sont montés sur le véhicule remorqué (14), **en ce que** l'autre moitié d'accouplement (18) est montée sur le véhicule remorqué (14) et **en ce que** l'une des moitiés d'accouplement (16) est reliée à la partie alimentation du véhicule tracteur (12) par un conduit d'alimentation souple (16d).

25. Ensemble routier selon l'une des revendications 1 à 24, **caractérisé en ce qu'**il est prévu une unité de commande (21) pour la commande du déplacement du dispositif de réglage (20) et, si on le souhaite, du dispositif preneur (24).

26. Ensemble routier selon la revendication 25, **caractérisé en ce qu'**une pluralité de capteurs (23) est prévue pour la détection d'une position momentanée du dispositif de réglage (20) et, si on le souhaite, du dispositif preneur (24) ainsi que pour l'envoi de signaux de détection correspondants à l'unité de commande (21).
